## Europäisches Patentamt
## European Patent Office
## Office européen des brevets

(19)

(11) Veröffentlichungsnummer: **0 348 668 B1**

(12)

# EUROPÄISCHE PATENTSCHRIFT

(45) Veröffentlichungstag der Patentschrift:
**18.12.91 Patentblatt 91/51**

(51) Int. Cl.⁵: **F16L 5/00, F16L 3/08, H02G 3/26**

(21) Anmeldenummer: **89109351.0**

(22) Anmeldetag: **24.05.89**

(54) **Halter zur Fixierung von zumindest einem länglichen Rundkörper.**

(30) Priorität: **01.07.88 DE 3822374**

(43) Veröffentlichungstag der Anmeldung:
**03.01.90 Patentblatt 90/01**

(45) Bekanntmachung des Hinweises auf die
Patenterteilung:
**18.12.91 Patentblatt 91/51**

(84) Benannte Vertragsstaaten:
**DE FR GB IT**

(56) Entgegenhaltungen:
**US-A- 3 634 608**
**US-A- 3 918 667**

(73) Patentinhaber: **Dr.Ing.h.c. F. Porsche Aktiengesellschaft**
**Porschestrasse 42**
**W-7000 Stuttgart 40 (DE)**

(72) Erfinder: **Binder, Hartmut**
**Schwabstrasse 2**
**W-7250 Leonberg (DE)**

EP 0 348 668 B1

**Beschreibung**

Die Erfindung bezieht sich auf einen Halter zur Festlegung von zumindest einem länglichen Rundkörper wie Kabel, Leitung, Schlauch oder dergleichen gemäß dem Oberbegriff des Anspruchs 1 und ein Verfahren zur Festlegung dieses Rundkörpers an einem Tragteil durch den Halter.

Ein bekannter Halter der eingangs genannten Gattung (US-A-3634608) besteht aus zwei Hälften, die an ihrem einen Endbereich über ein Filmgelenkscharnier miteinander verbunden sind. Nach Einsetzen des länglichen Rundkörpers in die entsprechenden Ausnehmungen des Halters werden die beiden Hälften zusammengeklappt und der Halter wird in eine Schlitzöffnung einer Wand eines feststehenden Tragteils eingesetzt.

Bei einer randseitig geschlossenen Schlitzöffnung erfolgt dies durch Einklipsen, wogegen bei einer in Einschubrichtung offenen Schlitzöffnung der Halter durch Schrägstellen und einschließendes Verdrehen in das Tragteil eingesetzt wird.

Bei einem anderen bekannten Halter (DE-A-3106794) werden die beiden Hälften nach Einsetzen des länglichen Rundkörpers zusammengeklappt, wodurch Schnappverbindungselemente der beiden Hälften miteinander zusammenwirken und so den Rundkörper fixieren. Zur Befestigung des Halters ist an einem angrenzenden feststehenden Tragteil ein Gewindezapfen angeordnet, auf den der Halter aufgesteckt wird. Der Halter weist benachbart dem Filmgelenkscharnier eine durch Rinnen der beiden Hälften gebildete Öffnung auf, wobei die beiden Rinnen mit Gewindegängen versehen sind.

Diesem Halter haftet der Nachteil an, daß zum Fixieren der beiden Hälften in ihrer Schließlage spezielle Schnappverbindungselemente an beiden Hälften vorzusehen sind, die die Herstellung des Halters verteuern. Ferner müssen zur Befestigung des Halters sowohl am Halter als auch am Tragteil kostenaufwendige Maßnahmen (Rinnen mit Gewindegängen ; Gewindezapfen usw.) getroffen werden.

Aufgabe der Erfindung ist es, an einem Halter und einem Tragteil solche Vorkehrungen zu treffen, daß sowohl der Aufbau des Halters als auch seine Befestigung am Tragteil vereinfacht wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß duch die Anordnung einer in Einschubrichtung offenen Schlitzöffnung am Tragteil und eines umfangsseitig angeordneten Aufnahmeabschnittes am Halter ein im Aufbau einfacher Halter sowie eine schnelle und sichere Montage und Demontage des Halters am Tragteil geschaffen wird. Durch das Einschieben des Halters wirkt der Grund des Aufnahmeabschnittes mit der Schlitzöffnung zusammen und die beiden Hälften werden selbsttätig in ihre Schließstellung bewegt und verbleiben in dieser. Die Ausbildung von Schnappverbindungselementen an dem dem Filmgelenkscharnier abgekehrten Endbereich des Halters kann somit entfallen. Durch die abwechselnde Anordnung der den Aufnahmeabschnitt bildenden Abstellungen werden die Herstellungskosten reduziert, da kein zusätzlicher Schieber am Werkzeug benötigt wird. Die örtlich an den Abstellungen angeformten Rasten, welche in korrespondierende Rastöffnungen des Tragteiles eingreifen, bewirken eine zusätzliche Fixierung des Halters am Tragteil. Der Halter weist einen einfachen Aufbau auf und läßt sich kostengünstig herstellen und schnell und einfach montieren.

Ein Ausführungsbeispiel der Erfindung ist in der Zeichnung dargestellt und wird im folgenden näher erläutert.

Es zeigt

Fig. 1    eine Seitenansicht auf ein feststehendes Tragteil mit einem eingesetzten Halter,
Fig. 2    eine Seitenansicht auf den Halter in seiner auseinandergeklappten Offenstellung in größerem Maßstab,
Fig. 3    einen Schnitt nach der Linie III-III der Fig. 2 in größerem Maßstab,
Fig. 4    einen Schnitt nach der Linie IV-IV der Fig. 2,
Fig. 5    einen Schnitt nach der Linie V-V der Fig. 2,
Fig. 6    einen Schnitt nach der Linie VI-VI der Fig. 2 in größerem Maßstab,
Fig. 7    einen Schnitt nach der Linie VII-VII der Fig. 2 in größerem Maßstab,
Fig. 8    eine Seitenansicht auf das Tragteil mit der Schlitzöffnung.

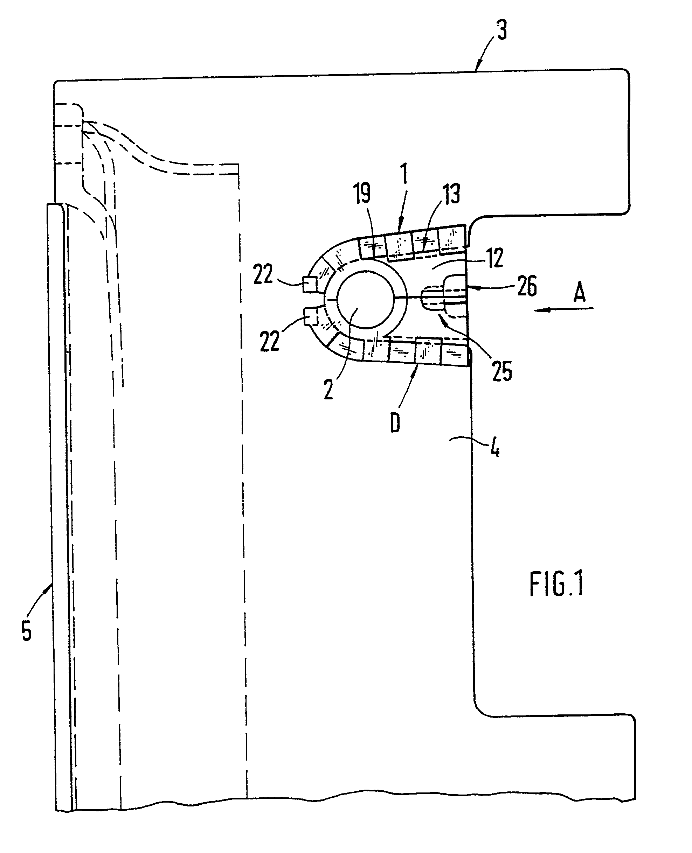

In Fig. 1 ist ein Halter 1 zur Festlegung von zumindest einem länglichen Rundkörper 2 dargestellt, wobei der Halter 1 an einem angrenzenden, feststehenden Tragteil 3 in Lage gehalten ist.

Der längliche Rundkörper 2 kann ein Kabel, eine Leitung, ein Rohr, ein Schlauch oder dergleichen sein. Das Tragteil 3 wird im Ausführungsbeispiel durch eine aufrecht verlaufende, sich in Fahrzeuglängsrichtung erstreckende Wand 4 eines Klimagehäuses 5 gebildet. Der Rundkörper 2 verläuft dabei quer zur Fahrzeuglängsrichtung. Die Wand 4 kann aus Kunststoff oder Metall gefertigt sein und jede mögliche Lage einnehmen.

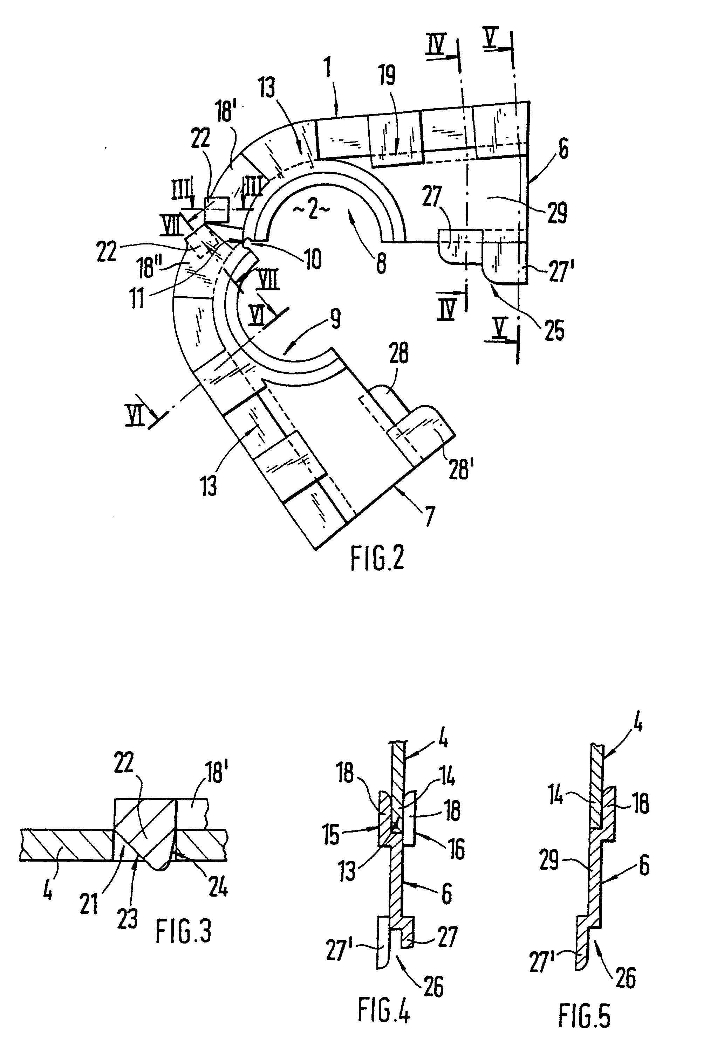

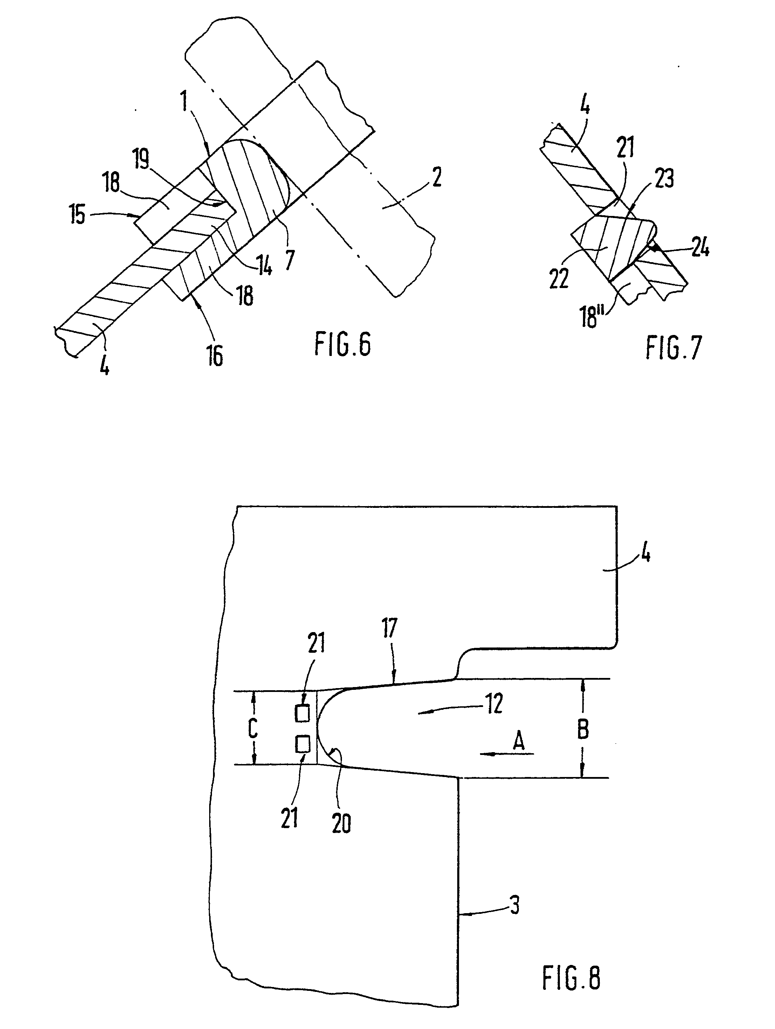

Der vorzugsweise aus einem geeigneten Kunststoff gefertigte Halter 1 umfaßt zwei Hälften 6, 7 mit jeweils halbkreisförmigen Ausnehmungen 8, 9 zum Hindurchführen des Rundkörpers 2 (Fig. 2). Die beiden Hälften 6, 7 sind an ihren einen Endbereich 10 über ein Filmgelenkscharnier 11 miteinander verbunden. Zur Befestigung des Halters 1 ist in der Wand 4 eine in Einschubrichtung A des Halters 1 offene längliche Schlitzöffnung 12 angeordnet, in die der Halter 1 nach Umgreifen des Rundkörpers 2 einschiebbar ist (Fig. 8).

Zur Fixierung des Halters 1 an der Wand 4 weist der Halter 1 zumindest bereichsweise an seinem Umfang einen Aufnahmeabschnitt 13 auf, der den der Schlitzöffnung 12 zugekehrten Rand 14 bzw. die Wand 4 des Tragteiles 3 beidseitig umgreift. Der Aufnahmeabschnitt 13 ist — im Querschnitt gesehen — etwa U-förmig profiliert, wobei die beiden aufrechten Schenkel 15, 16 soweit voneinander entfernt sind, daß zwischen ihnen der Rand 14 der Wand 4 aufgenommen werden kann. Die offene Seite des U-förmigen Aufnahmeabschnittes 13 ist einer Begrenzungskante 17 der Schlitzöffnung 12 zugekehrt.

Die Schenkel 15, 16 können zu beiden Seiten der Wand 4 durchgehend ausgebildet sein. Gemäß Fig. 1 werden die beiden Schenkel 15, 16 durch umfangsseitige Abstellungen 18 des Halters 1 gebildet, wobei die örtlichen Abstellungen 18 abwechselnd und versetzt zu beiden Seiten der Wand 4 am Halter 1 angeformt sind. Der Grund 19 des Aufnahmeabschnittes 13 stützt sich bei montiertem Halter 1 an der äußeren Begrenzungskante 17 der Schlitzöffnung 12 ab, wodurch die beiden Hälften 6, 7 des Halters 1 selbsttätig gegeneinander gepreßt werden und ihre Schließstellung D einnehmen. Der Formverlauf des Grundes 19 ist der Kontur der Schlitzöffnung 12 angepaßt.

Die längliche Schlitzöffnung 12 weist im Bereich ihrer offenen Seite ihre größte Weite B auf und verjüngt sich anschließend in Einschubrichtung A gesehen kontinuierlich bis zu ihrem halbkreisförmigen Endbereich 20 auf das Maß C.

Zur zusätzlichen Fixierung des Halters 1 am Tragteil 3 sind an der Wand 4 Rastöffnungen 21 vorgesehen, in die zungenartige Rasten 22 des Halters 1 eingreifen. Gemäß Fig. 8 sind an der Wand 4 außerhalb der Schlitzöffnung 12 zwei übereinanderliegende, fluchtende Rastöffnungen 21 vorgesehen, die im Ausführungsbeispiel quadratisch ausgebildet sind. Die Rastöffnungen 21 können jedoch auch rechteckig, dreieckförmig, kreisrund oder dergleichen ausgebildet sein.

Die Rasten 22 sind an die beiderseits des Filmgelenkscharniers 11 angeordneten Abstellungen 18', 18" angeformt, also jede Raste 22 auf einer anderen Seite der Wand 4. Zur leichteren Montage weisen die Rasten 22 Anlaufschrägen 23, 24 auf (Fig. 3 und 7). Die Rasten 22 durchdringen die Rastöffnung 21 und stehen auf der gegenüberliegenden Seite der Wand 4 geringfügig vor (Fig. 3 und 7).

Auf dem dem Filmgelenkscharnier 11 abgekehrten Endbereich 25 des Halters 1 wirken die beiden Hälften 6, 7 über eine Steckverbindung 26 zusammen. Aus diesem Grunde sind sowohl an der einen Hälfte 6 als auch an der anderen Hälfte 7 des Halters 1 jeweils zwei versetzt zueinander angeordnete Zungen 27, 27' bzw. 28, 28' angeformt, wobei sich die Zungen 27, 27' bzw. 28, 28' jeder Hälfte 6, 7 an gegenüberliegenden Seiten einer vertikalen Wand 29 des Halters 1 erstrecken. Die beiden Zungen 27, 27' der Hälfte 6 und die Zungen 28, 28' der Hälfte 7 sind versetzt zueinander angeordnet. Der Halter 1 kann selbstverständlich auch mehrere Ausnehmungen 8, 9 zur Aufnahme von vorzugsweise nebeneinanderliegenden Rundkörpern 2 aufweisen.


## Patentansprüche

1. Halter (1) zur Festlegung von zumindest einem länglichen Rundkörper (2) wie Kabel, Leitung, Schlauch oder dergleichen, wobei der Halter (1) zwei den Rundkörper (2) umgebende Hälften (6, 7) aufweist, die an ihrem einen Endbereich (10) über ein Filmgelenkscharnier (11) miteinander verbunden sind, **dadurch gekennzeichnet,** daß der Halter (1) zumindest in einem Teilbereich seines Umfangs einen etwa U-förmig profilierten Aufnahmabschnitt (13) aufweist, wobei die beiden Schenkel (15, 16) des Aufnahmeabschnittes (13) durch umfangsseitige Abstellungen (18) gebildet werden, die abwechselnd und versetzt zueinander an beiden Schenkeln (15, 16) ausgebildet sind, daß zur zusätzlichen Fixierung des Halters (1) an diesem zungenartige Rasten (22) angeformt sind und daß die beiden Hälften (6, 7) des Halters (1) auf dem dem Filmgelenkscharnier (11) abgekehrten Endbereich (25) über eine Steckverbindung (26) zusammenwirken.

2. Verfahren zur Festlegung von zumindest einem länglichen Rundkörper (2) an einem feststehenden Tragteil (3) durch einen Halter (1) nach Anspruch 1, **dadurch gekennzeichnet,** daß der Halter (1) nach Umgreifen des Rundkörpers (2) und Herstellung der Steckverbindung (26) in eine in Einschubrichtung (A) offene Schlitzöffnung (12) einer Wand (4) des Tragteiles (3) einschiebbar ist, wobei die beiden Schenkel (15, 16) des Aufnahmeabschnittes (13) die Wand (4) des Tragteiles (3) beidseitig umgreifen bzw. zwischen sich aufnehmen, und daß sich bei montiertem Halter (1) der Grund (19) des Aufnahmeabschnittes (13) an der äußeren Begrenzungskante (17) der Schlitzöffnung (12) abstützt und dabei die zungenartigen Rasten (22) des Halters (1) in fluchtende Rastöffnungen (21) der Wand (4) eingreifen.

3. Verfahren nach Anspruch 2, **dadurch gekennzeichnet,** daß sich die längliche Schlitzöffnung (12) in Einschubrichtung (A) gesehen, kontinuierlich verjüngt und in einen halbkreisförmigen Endbereich (20) ausläuft.

4. Verfahren nach Anspruch 2, **dadurch gekennzeichnet,** daß bei eingesetztem Halter (1) die beiden Hälften (6, 7) des Halters (1) selbsttätig in eine Schließstellund (D) bewegt werden.

5. Halter nach Anspruch 1, **dadurch gekennzeichnet,** daß vorzugsweise zwei Rasten (22) vorgesehen sind, die an gegenüberliegenden Abstellungen (18', 18") des Halters (1) angeformt sind.

6. Verfahren nach Ansprüchen 2 bis 4, **dadurch gekennzeichnet,** daß die Rastöffnungen (21) rechteckig oder quadratisch ausgebildet sind.

## Claims

1. A retaining member (1) for securing at least one elongate cylindrical body (2), such as a cable, line, hose or the like, the retaining member (1) comprising two halves (6, 7) which surround the cylindrical body (2) and which are connected together at one of their end areas (10) by way of a film hinge (11), characterized in that the retaining member (1) comprises a receiving portion (13) substantially U-shaped in section at least in one partial area of its periphery, the two arms (15, 16) of the receiving portion (13) being formed by projections (18) on the periphery which are formed alternately and offset from one another on the two arms (15, 16), tongue-like catches (22) are integrally formed on the retaining member (1) for the additional fastening thereof, and the two halves (6, 7) of the retaining member (1) at the end area (25) remote from the film hinge (11) cooperate by way of a plug-in connexion (26).

2. A method of securing at least one elongate cylindrical body (2) on a stationary support part (3) by a retaining member (1) according to Claim 1, characterized in that after engaging around the cylindrical body (2) and producing the plug-in connexion (26) the retaining member (1) is insertable into a slot opening (12) — open in the insertion direction (A) — in a wall (4) of the support part (3), the two arms (15, 16) of the receiving portion (13) surrounding or receiving between them the wall (4) of the support part (3) on both sides, and when the retaining member (1) is mounted the base (19) of the receiving portion (13) is supported on the outer boundary edge (17) of the slot opening (12) and the tongue-like catches (22) of the retaining member (1) engage in aligned catch openings (21) in the wall (4).

3. A method according to Claim 2, characterized in that the elongate slot opening (12) is continuously tapered inwards as viewed in the insertion direction (A) and terminates in a semicircular end area (20).

4. A method according to Claim 2, characterized in that when the retaining member (1) is inserted the two halves (6, 7) of the retaining member (1) are moved automatically into a closed position (D).

5. A retaining member according to Claim 1, characterized in that two catches (22) are preferably provided, integrally formed on opposite projections (18', 18") on the retaining member (1).

6. A method according to claims 2 to 4, characterized in that the catch openings (21) are made rectangular or square.

## Revendications

1. Support (1) pour la fixation d'au moins un corps cylindrique (2) allongé, tel que câble, conducteur, tuyau ou analogue, le support (1) présentant deux moitiés (6, 7 qui entourent le corps cylindrique (2) et sont reliées ensemble à l'une de leur zone d'extrémité (10) par l'intermédiaire d'une charnière d'articulation à film (11), caractérisé en ce que le support (1) présente, au moins dans une zone partielle de sa périphérie, une section de réception (13) à profile à peu près en U, les deux ailes (15, 16) de la section de réception (13) étant formées par des décrochements (18) périphériques, réalisés alternativement et de façon mutuellement décalée sur les deux ailes (15, 16), en ce que, pour assurer une fixation supplémentaire au support (1), des ergots (22) en languette sont formés d'un seul tenant sur celui-ci et en ce que les deux moitiés (6, 7) du support (1) coopèrent sur la zone d'extrémité (25) opposée à la charnière d'articulation à film (11), par l'intermédiaire d'une liaison à enfichage (26).

2. Procédé pour la fixation d'au moins un corps cylindrique (2) allongé, sur une pièce porteuse (3) fixe, à l'aide d'un support (1) selon la revendication 1, caractérisé en ce que le support (1), une fois que le corps cylindrique (2) est enserré et que la liaison à enfichage (26) est constituée, est insérable dans une ouverture fendue (12), ouverte dans la direction de l'insertion (A), d'une paroi (4) de la pièce porteuse (3), les deux ailes (15, 16) de la section de réception (13) entourant des deux côtés la paroi (4) de la pièce porteuse (3), respectivement la logeant entre elles, et en ce que, lorsque le support est monté (1), le fond (19) de la section de réception (13) prend appui sur l'arête de délimitation extérieure (17) de l'ouverture fendue (12) et les ergots (22) en languette du support (1) s'engageant dans les ouvertures d'encliquetage (21) alignées de la paroi (4).

3. Procédé selon la revendication 2, caractérisé en ce que, vue dans la direction d'insertion (A), l'ouverture fendue allongée (12) s'effile de façon continue et s'étend en une zone d'extrémité (20) en forme de demi-cercle.

4. Procédé selon la revendication 2, caractérisé en ce que, lorsque le support (1) est inséré, les deux moitiés (6, 7) du support (1) sont automatiquement déplacées en position de fermeture (D).

5. Procédé selon la revendication 1, caractérisé en ce qu'il est prévu de préférence deux ergots (22), formés d'un seul tenant sur les décrochements opposés (18, 18″) du support (1).

6. Procédé selon les revendications 2 à 4, caractérisé en ce que les ouvertures d'encliquetage (21) sont rectangulaires ou quadratiques.

FIG.1

FIG.2

FIG.3

FIG.4

FIG.5

FIG.6

FIG.7

FIG.8